# EUROPÄISCHE PATENTANMELDUNG

(11) **EP 4 086 834 A1**
(43) Veröffentlichungstag der Anmeldung: **09.11.2022**
(21) Anmeldenummer: 21020244.6
(22) Anmeldetag: 02.05.2021
(51) Int. Cl.: G06Q 20/38, G07G 5/00, G06K 9/03, G06Q 20/20

(54) **AUFRÜSTMODUL FÜR BELEGDRUCKER ZUM VERIFIZIEREN VON DATEN**

(71) Anmelder: FrontNow GmbH, 10117 Berlin (DE)
(72) Erfinder: Lihotzky, Bernhard, 80802 München (DE); Webler, Jaderson Rafael, 80809 München (DE)
(74) Vertreter: Reich, Jochen

(57) **Zusammenfassung**

Die vorliegende Erfindung betrifft ein Aufrüstmodul für Belegdrucker zum Verifizieren von Daten, welches es ermöglicht, herkömmliche Belegdrucker derart nachträglich aufzurüsten, dass die ausgedruckten Daten in einer unabhängigen Einheit zu überprüfen sind. Besonders vorteilhaft ist hierbei, dass das vorgeschlagene Aufrüstmodul die tatsächlich gedruckten Daten ausliest und eben nicht datentechnisch entsprechende Daten im Netzwerk aufgreift. Hierdurch ist das Aufrüstmodul manipulationssicher und stellt eine komplett unabhängige Einheit zu dem Belegdrucker zur Verfügung. Das Aufrüstmodul muss lediglich an dem Belegdrucker angebracht werden und arbeitet im Übrigen völlig autonom zu dem Belegdrucker. Die vorliegende Erfindung betrifft ferner einen Belegdrucker aufweisend das vorgeschlagene Aufrüstmodul sowie ein Verfahren zum Betreiben des Aufrüstmoduls. Ferner wird ein Computerprogrammprodukt mit Steuerbefehlen vorgeschlagen, welche das vorgeschlagene Verfahren implementieren beziehungsweise die vorgeschlagene Vorrichtung und Anordnung betreiben.

## Beschreibung

Die vorliegende Erfindung betrifft ein Aufrüstmodul für Belegdrucker zum Verifizieren von Daten, welches es ermöglicht, herkömmliche Belegdrucker derart nachträglich aufzurüsten, dass die ausgedruckten Daten in einer unabhängigen Einheit zu überprüfen sind. Besonders vorteilhaft ist hierbei, dass das vorgeschlagene Aufrüstmodul die tatsächlich gedruckten Daten ausliest und eben nicht datentechnisch entsprechende Daten im Netzwerk aufgreift. Hierdurch ist das Aufrüstmodul manipulationssicher und stellt eine komplett unabhängige Einheit zu dem Belegdrucker zur Verfügung. Das Aufrüstmodul muss lediglich an dem Belegdrucker angebracht werden und arbeitet im Übrigen völlig autonom zu dem Belegdrucker. Die vorliegende Erfindung betrifft ferner einen Belegdrucker aufweisend das vorgeschlagene Aufrüstmodul sowie ein Verfahren zum Betreiben des Aufrüstmoduls. Ferner wird ein Computerprogrammprodukt mit Steuerbefehlen vorgeschlagen, welche das vorgeschlagene Verfahren implementieren beziehungsweise die vorgeschlagene Vorrichtung und Anordnung betreiben.

Aus dem Stand der Technik sind Kassensysteme bekannt, welche auf Veranlassung eines Kassierers einen Beleg der abgerechneten Waren ausdrucken. Hierbei handelt es sich typischerweise um Belegdrucker mit kleinformatigen Papierrollen, welche bedruckt werden bzw. um Thermopapier, welches mittels Erhitzens bedruckt wird.

Solche herkömmlichen Kassensysteme sind typischerweise netzwerktechnisch mit einem Computersystem verbunden und übermitteln die Beleginformationen an einen Server. Generell ist es möglich, die Information auf dem Server zu überprüfen, wobei allerdings das Problem besteht, dass die Daten bei der Übermittlung bereits manipuliert werden können. Auch können die Daten sobald sie auf dem Server angelangt sind manipuliert werden.

Ferner sind aus dem Stand der Technik Handscanner bekannt, welche über ein Schriftstück hinüber geführt werden und hierbei entsprechende Texte bzw. Grafiken optisch erfassen. Die Symbole werden in ein elektronisches Signal umgewandelt und ebenfalls an eine Recheneinheit übermittelt.

Ein Problem im Stand der Technik ist es, dass für die Übermittlung der Information stets die gleichen Schnittstellen verwendet werden. So wird kein Abbild des Belegs übermittelt, sondern vielmehr werden die gleichen Daten an einen Server übermittelt, welche dann durch den Beleg gedruckt werden. Sind diese Daten bereits verfälscht, so fällt dies eben nicht auf. Noch ein weiteres Problem im Stand der Technik ist es, dass Sicherheitsvorrichtungen mit dem Belegdrucker an sich verbunden sind und somit können Verifikationssysteme bereits mit dem Belegdrucker manipuliert werden.

Ein weiteres Problem im Stand der Technik ist es, dass zur Verschleierung von Einkäufen möglicherweise Belege vernichtet werden. Somit wird zwar generell ein Beleg erstellt, dieser findet aber keine weitere Beachtung. Dies ist nicht nur ein steuerliches Problem, sondern vielmehr kann eine entsprechende Buchhaltung nicht mehr erkennen, welche Waren ein Lager verlassen haben und welche noch vorrätig sind.

Es ist also eine Aufgabe der vorliegenden Erfindung eine Vorrichtung bereitzustellen, welche unabhängig von einem Belegdrucker Belege erfasst und sicher übermittelt. Ferner ist es eine Aufgabe der vorliegenden Erfindung einen entsprechenden Belegdrucker vorzuschlagen, der das Aufrüstmodul aufweist. Darüber hinaus soll ein Verfahren zum Betreiben des Aufrüstmoduls bereitgestellt werden. Ferner ist es eine Aufgabe ein Computerprogrammprodukt mit Steuerbefehlen bereitzustellen, welche das Verfahren implementieren bzw. die vorgeschlagene Vorrichtung und Anordnung betreiben.

Die Aufgabe wird gelöst durch ein Verfahren mit den Merkmalen gemäß Patentanspruch 1. Weitere vorteilhafte Ausgestaltungen sind in den Unteransprüchen angegeben.

Demgemäß wird ein Aufrüstmodul für herkömmliche Belegdrucker zum Verifizieren von Daten vorgeschlagen, aufweisend eine Datenerfassungseinheit, welche eingerichtet ist einen Beleg während der Erstellung optisch zu erfassen; einen ersten Datenspeicher mit Information bezüglich einer zu verifizierenden Information auf dem Beleg; einen zweiten Datenspeicher mit Referenzdaten; und eine Datenschnittstelle zur Übermittlung mindestens eines Teils des optisch erfassten Belegs und mindestens eines Teils der Referenzdaten.

Das vorgeschlagene Aufrüstmodul ist für jeden herkömmlichen Belegdrucker geeignet und muss lediglich an diesem fixiert werden. Das Aufrüstmodul kann völlig unabhängig d.h. autonom von dem Belegdrucker arbeiten. So ist es beispielsweise möglich in dem Aufrüstmodul eine eigene Stromversorgung vorzuhalten. Dies können beispielsweise herkömmliche Batterien oder aber auch ein Stromnetz sein. Darüber hinaus ist es besonders vorteilhaft, dass das Aufrüstmodul datentechnisch nicht mit dem Belegdrucker elektrisch gekoppelt werden muss. D.h. also dass das Aufrüstmodul keine Datenleitung mit dem Belegdrucker teilt. Darüber hinaus teilt das Aufrüstmodul keine Datenspeicher mit dem Belegdrucker und ist somit manipulationssicher.

Der herkömmliche Belegdrucker kann beispielsweise in ein Kassensystem integriert sein und eine Papierrolle bzw. Thermopapier aufweisen. Die Daten, die der Belegdrucker erzeugt, können sodann verifiziert werden. Hier ist es vorteilhaft, dass eben die Daten, die der Belegdrucker erzeugt, verifiziert werden und nicht die Daten, die der Belegdrucker verwendet.

Hierzu dient eine Datenerfassungseinheit, welche eingerichtet ist einen Beleg während der Erstellung optisch zu erfassen. Bei einem optischen Erfassen handelt es sich um ein Einscannen des sich typischerweise bewegenden Belegs. Der Beleg kommt also nach und nach aus dem Belegdrucker und wird hierbei gleichzeitig eingescannt. Dies hat den Vorteil, dass das Aufrüstmodul nicht bewegt werden muss, sondern vielmehr wird der zu verifizierende Beleg an dem Aufrüstmodul vorbeigeführt. Somit ist das Aufrüstmodul einfach herzustellen, da es keinerlei sich bewegende Teile aufweisen muss. Somit ist das Aufrüstmodul im Wesentlichen wartungsfrei.

Um erkennen zu können, welche Daten auf dem Beleg zu verifizieren sind, wird ein erster Datenspeicher vorgehalten. Dieser hält Informationen vor, die die zu verifizierende Information beschreibt. Hierbei kann es sich beispielsweise um eine Position auf dem Beleg handeln oder aber auch ein zu verifizierender Inhalt. Bei der Position handelt es sich um die Koordinaten des zu überprüfenden Eintrags.

Ein Beleg wird typischerweise immer in der gleichen Form gestaltet und somit kann in dem Datenspeicher vorgehalten werden, an welcher Stelle sich beispielsweise das Datum befindet. Somit kann nur ein Teil des Belegs verarbeitet werden, im vorliegenden Beispiel das Datum. Das Datum beispielsweise dann eine Rolle, wenn die Mehrwertsteuer geändert wurde. So kann der Datenspeicher eine Position des Datums auf dem Beleg anzeigen und zudem eine Position der Mehrwertsteuer. Somit werden diese beiden Informationen ausgelesen und in weiteren Schritten verifiziert.

Der Datenspeicher kann auch ein Datenformat vorhalten anhand dessen erkannt wird, welche Information auszulesen ist. Typischerweise wird ein Datum derart bereitgestellt, dass eine Zahl kleiner gleich 31 bereitgestellt wird, eine Zahl kleiner gleich zwölf und eine weitere Zahl die vierstellig ist und 19 oder 20 beinhaltet. Aufgrund dieser Angaben kann ein Datum erkannt werden und es kann quasi anhand des Formats auf dem Beleg gesucht werden, wo sich das Datum befindet. Weiterhin wird eine Mehrwertsteuer typischerweise mit Prozent angegeben und auch somit kann diese Information auf dem Beleg dynamisch gefunden werden.

Das Aufrüstmodul umfasst ferner einen zweiten Datenspeicher mit Referenzdaten. Hierbei muss es sich nicht um einen gesonderten Datenspeicher zum ersten Datenspeicher handeln, sondern vielmehr können beide Datenspeicher auf einer gemeinsamen Vorrichtung angeordnet werden. Die Aufteilung in den ersten Datenspeicher und in den zweiten Datenspeicher kann also auch eine logische Aufteilung sein. Die Referenzdaten geben an, welche Daten zu erwarten sind. So können die Referenzdaten beispielsweise einen Zeitstempel angeben. Folglich wird auf dem Beleg der Zeitstempel erfasst und mit dem Zeitstempel der Referenzdaten verglichen. Stimmen beide Informationen nicht überein bzw. stimmen zu einem gewissen Grad nicht überein, so erfolgt ein negatives Verifizieren und es wird ein entsprechendes Signal erzeugt. Das Signal kann ein akustisches oder ein optisches Signal des Aufrüstmoduls sein, kann aber auch ein elektrisches Signal sein, welches zur weiteren Verarbeitung datentechnisch übermittelt wird.

Der mindestens eine Teil des Belegs und mindestens ein Teil der Referenzdaten wird mittels einer Datenschnittstelle zur weiteren Verarbeitung bereitgestellt. Generell kann die weitere Verarbeitung innerhalb des Aufrüstmoduls erfolgen oder aber auch datentechnisch übermittelt werden und entfernt erfolgen. Die weitere Überarbeitung besteht im Wesentlichen darin, die Teile des Belegs, beispielsweise das Datum, mit den Referenzdaten zu vergleichen. Bei einer vordefinierten Abweichung kann ein Warnsignal erzeugt werden. Generell ist es vorteilhaft, dass sowohl die erfassten Teile des Belegs als auch die Referenzdaten von dem Aufrüstmodul bereitgestellt werden. So erfolgt lediglich ein Abgleichen der Daten und es kann erkannt werden, ob der Beleg mit tatsächlichen Daten übereinstimmt.

Manipuliert beispielsweise jemand das Datum oder die Mehrwertsteuer, so wird dies dadurch erkannt, dass der tatsächliche Beleg von den Referenzdaten abweicht. Es erfolgt also ein unabhängiges Bereitstellen der Referenzdaten, worauf hin der optisch erfasste Beleg geprüft wird. Dadurch, dass der Beleg optisch erfasst wird, müssen beide Vorrichtungen, nämlich der Belegdrucker und die Aufrüstvorrichtung, nicht elektronisch gekoppelt werden. Es erfolgt also rein ein optisches Auslesen, ohne dass elektronische Signale zwischen den beiden Vorrichtungen ausgetauscht werden. Der erfasste Beleg kann somit ebenfalls im System abgespeichert werden und es wird erkannt, wenn die Daten auf dem Beleg von den Referenzdaten abweichen. Darüber hinaus ist es auch generell möglich, dass der Beleg verschwindet und somit ist der Beleg nach seinem Ausdrucken in jedem Fall in dem System elektronisch hinterlegt.

Darüber hinaus besteht der Vorteil, dass gegebenenfalls physische Belege gar nicht aufgehoben werden müssen, sondern dass allein die Daten abgespeichert werden können. So kann der Beleg einem Kunden ausgehändigt werden und das vorgeschlagene Aufrüstmodul hinterlegt lediglich die Daten im System. So muss der Beleg gar nicht als Bilddatei abgespeichert werden, sondern es können die alphanumerischen Informationen abgelegt werden. Somit ist das vorgeschlagene Verfahren bzw. das Vorgehen sehr speichereffizient.

Gemäß einem Aspekt der vorliegenden Erfindung weist das Aufrüstmodul eine Montageeinrichtung zur Fixierung des Aufrüstmoduls an einem herkömmlichen Belegdrucker auf. Dies hat den Vorteil, dass das Aufrüstmodul mit jedem herkömmlichen Belegdrucker kombiniert werden kann. Bei der Montageeinrichtung kann es sich beispielsweise um ein Klebeband handeln oder aber eine Steckvorrichtung. Generell kann das Aufrüstmodul auch aufgeschraubt werden. Hierbei muss lediglich eine Sichtverbindung von der Datenerfassungseinheit zu dem Beleg möglich sein.

Gemäß einem weiteren Aspekt der vorliegenden Erfindung ist die Datenerfassungseinheit eingerichtet den sich bewegenden Beleg während der Erstellung optisch zu erfassen. Dies hat den Vorteil, dass das Aufrüstmodul an sich keine beweglichen Teile aufweisen muss, sondern vielmehr wird der Beleg an der Datenerfassungseinheit vorbeigeführt und sogleich eingescannt.

Gemäß einem weiteren Aspekt der vorliegenden Verbindung sind der erste Datenspeicher und/oder der zweite Datenspeicher mit einer Datenschnittstelle verbunden. Dies hat den Vorteil, dass die Datenspeicher dynamisch gefüllt werden können. Beispielsweise kann ein Zeitstempel von einem zentralen Server abgerufen werden. Auch können in Abhängigkeit des Belegs Informationen bereitgestellt werden, wo welche Information zu finden ist.

Gemäß einem weiteren Aspekt der vorliegenden Erfindung werden die zu verifizierenden Informationen und/ oder die Referenzdaten netzwerktechnisch ausgelesen. Dies hat den Vorteil, dass die weitere Verarbeitung auch extern zu dem Aufrüstmodul erfolgen kann und entsprechende Daten werden mittels eines Netzwerks übermittelt.

Gemäß einem weiteren Aspekt der vorliegenden Erfindung beschreibt die zu verifizierende Information jeweils mindestens ein Format, eine Position auf dem Beleg, eine Zeichenfolge und/ oder ein Muster. Dies hat den Vorteil, dass statisch oder dynamisch die zu verifizierende Information ausgelesen werden kann und es können sogar Muster wie ein Strichcode oder ein QR Code erfasst werden. Somit lassen sich alle möglichen Informationen von dem Beleg auslesen.

Gemäß einem weiteren Aspekt der vorliegenden Erfindung weisen die Referenzdaten jeweils mindestens einen Zeitstempel, eine Zeichenfolge und/ oder ein Muster auf. Dies hat den Vorteil, dass alle möglichen Informationen auf dem Beleg verglichen werden können. Hier kann spezifiziert werden, welche Daten analysiert werden sollen und entsprechend werden Soll-Daten eingeführt.

Gemäß einem weiteren Aspekt der vorliegenden Erfindung erfolgt die Übermittlung mindestens eines Teils des optisch erfassten Belegs und mindestens eines Teils der Referenzdaten an eine Verifizierungseinrichtung, welche eingerichtet ist, den mindestens einen Teil des optisch erfassten Belegs und den mindestens einen Teil der Referenzdaten zu vergleichen. Diese Einrichtung ist entweder in dem Aufrüstmodul angeordnet oder entfernt. Sie dient zum Vergleichen der erfassten Informationen mit den Referenzdaten. Somit kann identifiziert werden, ob die Daten korrekt sind.

Gemäß einem weiteren Aspekt der vorliegenden Erfindung weist das Aufrüstmodul eine Zeichenerkennungseinheit auf. Dies hat den Vorteil, dass nicht nur grafisch der Beleg eingelesen werden kann, sondern vielmehr werden entsprechende Zeichen erkannt. Hierbei kann eine OCR Software Einsatz finden. Somit können die entsprechenden Informationen auch speichereffizient abgespeichert werden.

Gemäß einem weiteren Aspekt der vorliegenden Erfindung hält mindestens ein Datenspeicher technische Betriebsparameter über den Belegdrucker vor. Dies hat den Vorteil, dass eingestellt werden kann, welches Papier der Belegdrucker verwendet bzw. mit welcher Geschwindigkeit der Beleg ausgegeben wird.

Gemäß einem weiteren Aspekt der vorliegenden Erfindung weist das Aufrüstmodul eine Luftschnittstelle auf. Dies hat den Vorteil, dass die Daten drahtlos übermittelt werden können und somit besteht ein geringer Aufwand bei der Montage bzw. Einrichtung des Aufrüstmoduls. Weitere Autonomie lässt sich dadurch erreichen, dass Batterien eingelegt werden.

Die Aufgabe wird auch gelöst mittels eines Belegdruckers zum Verifizieren von Daten aufweisend ein Aufrüstmodul gemäß den vorgenannten Merkmalen.

Die Aufgabe wird auch gelöst durch ein Verfahren zum Betreiben eines Aufrüstmoduls für herkömmliche Belegdrucker zum Verifizieren von Daten, aufweisend ein optisches Erfassen eines Belegs während der Erstellung; ein Auslesen eines ersten Datenspeichers mit Information bezüglich einer zu verifizierenden Information auf dem Beleg; ein Auslesen eines zweiten Datenspeichers mit Referenzdaten; und ein Übermitteln mindestens eines Teils des optisch erfassten Belegs und mindestens eines Teils der Referenzdaten.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Ablaufdiagramm des vorgeschlagenen Verfahrens gemäß einem Aspekt der vorliegenden Erfindung;
- Figur 2:: ein schematisches Blockschaltbild des vorgeschlagenen Verfahrens zum Verifizieren von Belegdaten gemäß einer Ausführungsform der vorliegenden Erfindung;
- Figur 3:: ein Blockdiagramm des vorgeschlagenen Verfahrens zum Erfassen, Verarbeiten und Verifizieren von Belegdaten gemäß einem Aspekt der vorliegenden Erfindung;
- Figur 4:: ein schematisches Ablaufdiagramm des vorgeschlagenen Verfahrens zur Behandlung fehlgeschlagener Verifizierungen von Daten gemäß einer Ausführungsform der vorliegenden Erfindung;
- Figur 5:: ein schematisches Blockschaltbild des vorgeschlagenen Verfahrens zum Einstellen des Aufrüstmoduls gemäß einem Aspekt der vorliegenden Erfindung;

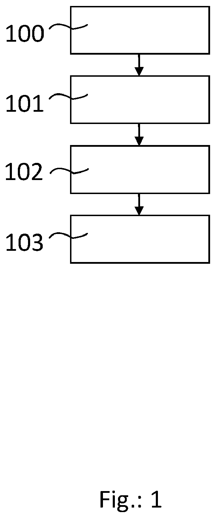

Figur 1 zeigt ein schematisches Blockschaltbild eines Verfahrens zum Betreiben eines Aufrüstmoduls für herkömmliche Belegdrucker zum Verifizieren von Daten, aufweisend ein optisches Erfassen 100 eines Belegs während der Erstellung; ein Auslesen 101 eines ersten Datenspeichers mit Information bezüglich einer zu verifizierenden Information auf dem Beleg; ein Auslesen 102 eines zweiten Datenspeichers mit Referenzdaten; und ein Übermitteln 103 mindestens eines Teils des optisch erfassten Belegs und mindestens eines Teils der Referenzdaten.

Vorliegend nicht gezeigt ist ein Datenspeicher oder ein computerlesbares Medium mit einem Computerprogrammprodukt aufweisend Steuerbefehle, welche das vorgeschlagene Verfahren implementieren bzw. die vorgeschlagene Systemanordnung betreiben.

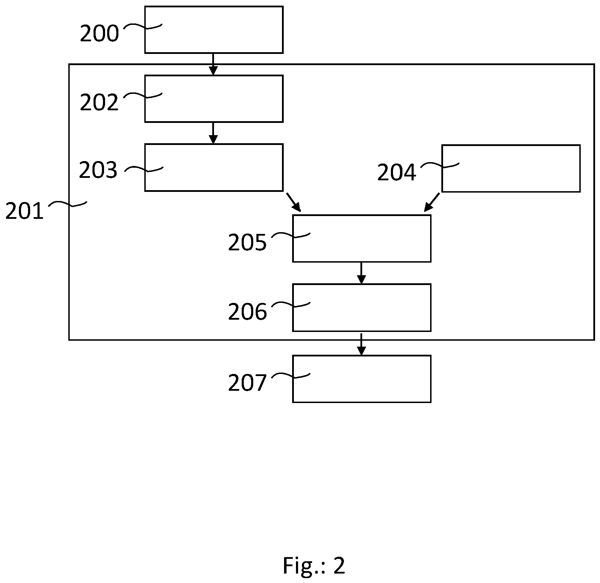

Figur 2 zeigt ein schematisches Blockschaltbild zum Verifizieren von Daten aus herkömmlichen Belegdruckern. Ein physischer Beleg 200 wird durch eine Datenerfassungseinheit 202 des Aufrüstmoduls 201 optisch erfasst und auf dem ersten Datenspeicher 203 gespeichert. Darauffolgend werden die erfassten Daten aus dem ersten Datenspeicher 203 zusammen mit den Referenzdaten aus dem zweiten Datenspeicher 204 durch eine Datenschnittstelle 205 auf eine Verifizierungseinrichtung 206 zur Weiterverarbeitung übertragen. Die Verifizierungseinrichtung 206 gibt das Ergebnis der Verifizierung 207 aus.

Vorliegend nicht dargestellt ist eine Zeichenerkennungseinheit, welche mittels interner oder externer Verarbeitung die erfassten Belegdaten in strukturierte Datensätze umwandelt und auf dem ersten Datenspeicher 203 speichert.

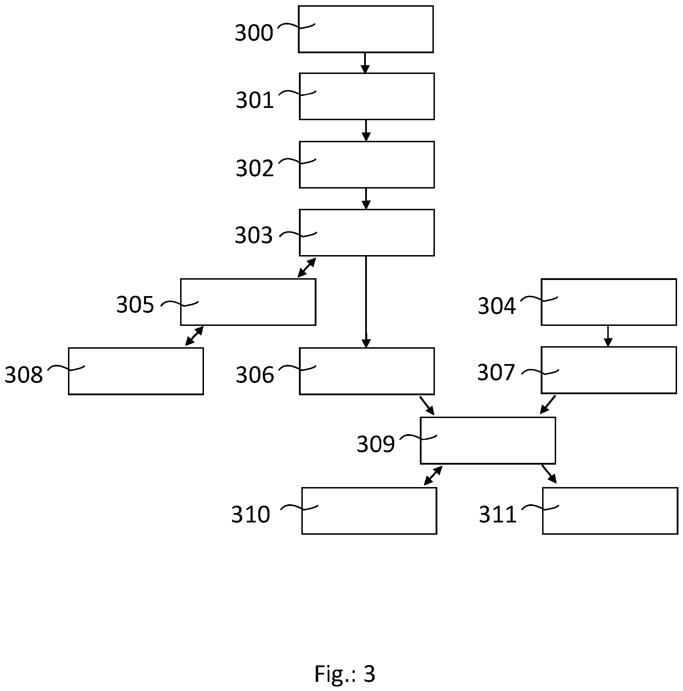

Figur 3 zeigt ein Blockdiagram zum Erfassen, Verarbeiten und Verifizieren von Belegdaten. Ein physischer Beleg 300 wird durch eine Datenerfassungseinheit 301 optisch in einer Bilddatei 302 erfasst und auf dem ersten Datenspeicher 303 gespeichert. Die Bilddatei 302 wird aus dem ersten Datenspeicher 303 an eine Zeichenerkennungseinheit 305 weitergeleitet. Die Einheit 305 verarbeitet den erfassten Beleg entweder intern 305 oder übermittelt diesen an eine externe OCR Software 308 und erhält die in Datensätze strukturierten Belegdaten durch ein Netzwerk zurück. Die strukturierten Belegdaten werden wiederum auf den ersten Datenspeicher 303 übertragen und gespeichert. Mindestens ein Teil der strukturierten Belegdaten 306 werden aus dem ersten Datenspeicher 303 gelesen und zusammen mit mindestens einem Teil der Referenzdaten 307, welche aus dem zweiten Datenspeicher 304 abgerufen werden, an die Verifizierungseinrichtung 309 gesendet. Die Verifizierungseinrichtung gleicht die empfangenen Daten entweder intern 309 oder extern 310 über das Netzwerk ab. Die Verifizierungseinrichtung 309 gibt den Output 311 aus, welcher das Ergebnis der Verifizierung darstellt.

Vorliegend nicht gezeigt ist eine Ausgabeeinheit des Aufrüstmoduls, welche fehlgeschlagene Verifizierungen optisch oder akustisch ausgibt.

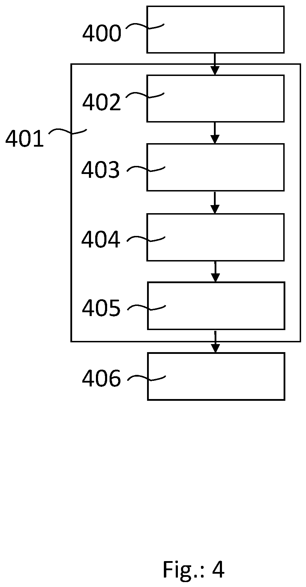

Figur 4 zeigt ein schematisches Ablaufdiagramm zur Behandlung fehlgeschlagener Verifizierungen von Daten. Ein physischer Beleg 400 wird von einem Aufrüstmodul 401 durch eine Datenerfassungseinheit 402 optisch erfasst und verarbeitet. Nach fehlgeschlagener Verifizierung durch eine Verifizierungseinheit 403 wird der Ausgabeeinheit 404 ein Signal gesendet, welches optisch oder akustisch ausgedrückt wird. Darauffolgend werden Logdaten 405 der fehlgeschlagenen Verifizierung intern gespeichert und in Abhängigkeit der Einstellungen des Aufrüstmoduls 401 an einen externen Server 406 zur Weiterverarbeitung übermittelt.

Die Datenspeicher für das gesamte Verifizierungsverfahren sind vorliegend nicht dargestellt.

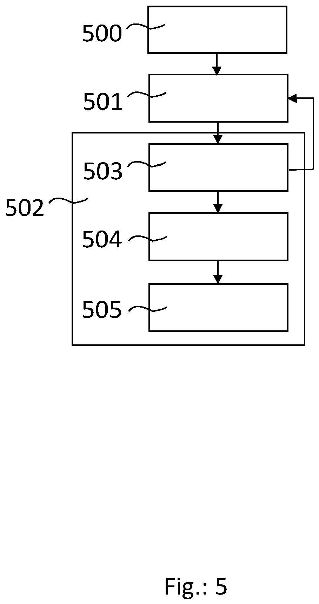

Figur 5 zeigt ein schematisches Blockschaltbild eines Verfahrens zum Einstellen des Aufrüstmoduls. Einstellungsparameter 500 wie Druckereinstellungen oder Referenzdaten werden in ein Computerprogramm 501 eingegeben. Das Programm 501 übermittelt der Datenschnittstelle 503 des Aufrüstmoduls 502 die eingegebenen Einstellungsparameter 500. Die von der Datenschnittstelle 503 empfangenen Einstellungsparameter 500 werden auf den Datenspeicher 504 geschrieben; nach erfolgreicher Speicherung der Einstellungen wird das Aufrüstmodul 502 neu gestartet 505. Die Datenschnittstelle 503 sendet dem Computerprogramm 501 den Status des Aufrüstmoduls 502 und/ oder mögliche Fehlermeldungen bei fehlerhafter Speicherung der Einstellungsparameter 500.

Vorliegend nicht gezeigt ist eine Ausgabeeinheit des Aufrüstmoduls 502, welche Fehlermeldungen oder Status optisch oder akustisch ausgibt.

## Patentansprüche

1. Aufrüstmodul für herkömmliche Belegdrucker zum Verifizieren von Daten, aufweisend:
- eine Datenerfassungseinheit, welche eingerichtet ist einen Beleg während der Erstellung optisch zu erfassen;
- einen ersten Datenspeicher mit Information bezüglich einer zu verifizierenden Information auf dem Beleg;
- einen zweiten Datenspeicher mit Referenzdaten; und
- eine Datenschnittstelle zur Übermittlung mindestens eines Teils des optisch erfassten Belegs und mindestens eines Teils der Referenzdaten.

2. Aufrüstmodul nach Anspruch 1, **dadurch gekennzeichnet, dass** das Aufrüstmodul eine Montageeinrichtung zur Fixierung des Aufrüstmoduls an einem herkömmlichen Belegdrucker aufweist.

3. Aufrüstmodul nach Anspruch 1 oder 2, **dadurch gekennzeichnet, dass** die Datenerfassungseinheit eingerichtet ist den sich bewegenden Beleg während der Erstellung optisch zu erfassen.

4. Aufrüstmodul nach einem der vorhergehenden Ansprüche, **dadurch gekennzeichnet, dass** der erste Datenspeicher und/ oder der zweite Datenspeicher mit einer Datenschnittstelle verbunden ist.

5. Aufrüstmodul nach einem der vorhergehenden Ansprüche, **dadurch gekennzeichnet, dass** die zu verifizierenden Information und/ oder die Referenzdaten netzwerktechnisch ausgelesen werden.

6. Aufrüstmodul nach einem der vorhergehenden Ansprüche, **dadurch gekennzeichnet, dass** die zu verifizierende Information jeweils mindestens ein Format, eine Position auf dem Beleg, eine Zeichenfolge und/ oder ein Muster beschreibt.

7. Aufrüstmodul nach einem der vorhergehenden Ansprüche, **dadurch gekennzeichnet, dass** die Referenzdaten jeweils mindestens einen Zeitstempel, eine Zeichenfolge und/ oder ein Muster aufweisen.

8. Aufrüstmodul nach einem der vorhergehenden Ansprüche, **dadurch gekennzeichnet, dass** die Übermittlung mindestens eines Teils des optisch erfassten Belegs und mindestens eines Teils der Referenzdaten an eine Verifizierungseinrichtung erfolgt, welche eingerichtet ist den mindestens einen Teil des optisch erfassten Belegs und den mindestens einen Teil der Referenzdaten zu vergleichen.

9. Aufrüstmodul nach einem der vorhergehenden Ansprüche, **dadurch gekennzeichnet, dass** das Aufrüstmodul eine Zeichenerkennungseinheit aufweist.

10. Aufrüstmodul nach einem der vorhergehenden Ansprüche, **dadurch gekennzeichnet, dass** mindestens ein Datenspeicher technische Betriebsparameter über den Belegdrucker vorhält.

11. Aufrüstmodul nach einem der vorhergehenden Ansprüche, **dadurch gekennzeichnet, dass** das Aufrüstmodul eine Luftschnittstelle aufweist.

12. Belegdrucker zum Verifizieren von Daten aufweisend ein Aufrüstmodul nach einem der Ansprüche 1 bis 11.

13. Verfahren zum Betreiben eines Aufrüstmoduls für herkömmliche Belegdrucker zum Verifizieren von Daten, aufweisend:
- ein optisches Erfassen (100) eines Belegs während der Erstellung;
- ein Auslesen (101) eines ersten Datenspeichers mit Information bezüglich einer zu verifizierenden Information auf dem Beleg;
- ein Auslesen (102) eines zweiten Datenspeichers mit Referenzdaten; und
- ein Übermitteln (103) mindestens eines Teils des optisch erfassten Belegs und mindestens eines Teils der Referenzdaten.

14. Computerprogrammprodukt, umfassend Befehle, die bei der Ausführung des Programms durch einen Computer diesen veranlassen, die Schritte des Verfahrens nach Anspruch 13 auszuführen.

15. Computerlesbares Speichermedium, umfassend Befehle, die bei der Ausführung durch einen Computer diesen veranlassen, die Schritte des Verfahrens nach Anspruch 13 auszuführen.
